Europäisches Patentamt

European Patent Office

Office européen des brevets

(19)

(11) Veröffentlichungsnummer: **0 197 177**
**A1**

(12) # EUROPÄISCHE PATENTANMELDUNG

(21) Anmeldenummer: 85104325.7

(22) Anmeldetag: 10.04.85

(51) Int. Cl.⁴: **G 01 F 15/04**
G 01 F 3/22, G 01 D 3/04

(43) Veröffentlichungstag der Anmeldung:
15.10.86  Patentblatt  86/42

(84) Benannte Vertragsstaaten:
AT BE DE FR GB IT NL

(71) Anmelder: G. Kromschröder Aktiengesellschaft
Adolfstrasse 74
D-4500 Osnabrück(DE)

(72) Erfinder: Kiper, Gerd, Dr.-Ing.
Wolfsberg 16
D-3257 Springe 5(DE)

(72) Erfinder: Kopp, Franz Otto, Dr.-Ing.
Ostfeldstrasse 47
D-3000 Hannover 71(DE)

(74) Vertreter: Weisse, Jürgen, Dipl.-Phys. et al,
Patentanwälte Dipl.-Phys. Jürgen Weisse Dipl.-Chem. Dr.
Rudolf Wolgast Bökenbusch 41 Postfach 11 03 86
D-5620 Velbert 11 Langenberg(DE)

(54) Einrichtung zur Temperaturkompensation bei einem Gaszähler.

(57) Bei einem Gaszähler ist zwischen Meßwerk und Zählwerk ein Reibgetriebe angeordnet, das von einer Bimetallgeder temperaturabhägig verstellbar ist. Das Reibgetriebe besteht aus zwei parallelen Reibscheiben (11,12) und zwei Reibrädern (18,19), die miteinander über angeformte Zahnräder gekuppelt sind. Die Reibräder sind in einem Halteglied (32) gelagert, das seinerseits schwenkbar in einem Steuerglied (13) gelagert ist. Das Steuerglied (13) ist von der Bimetalfeder (16) verstellbar. Die Reibräder (18,19) ziehen sich im Betrieb gegen die Reibscheiben (11,12) fest, so daß die Teile nicht stark gegeneinander vorgespannt zu werden brauchen. Es ergibt sich so eine einfache und verschleißarme Konstruktion.

Fig. 2

EP 0 197 177 A1

Einrichtung zur Temperaturkompensation bei einem
Gaszähler

Die Erfindung betrifft eine Einrichtung zur Temperaturkompensation bei einem Gaszähler, bei welchem ein Zählwerk von einem Meßwerk des Gaszählers antreibbar ist, enthaltend

(a)   ein in die Antriebsverbindung zwischen Meßwerk und Zählwerk eingeschaltetes, stufenlos verstellbares Reibgetriebe und

(b)   temperaturabhängige Stellmittel, durch welche das Reibgetriebe verstellbar ist.

Es sind Mengenumwerter für Gaszähler bekannt, mittels derer die Drehbewegung der Ausgangswelle eines Gasvolumenzählers unter Berücksichtigung des Gasdrucks und der Gastemperatur in eine Drehbewegung zum Antrieb eines Zählwerkes umsetzbar ist, welche dem auf Normalbedingungen reduzierten Gasvolumenstrom proportional ist.

Durch die DE-PS 12 12 738 ist ein Mengenumwerter dieser Art bekannt, bei welchem zwischen die Ausgangswelle des Gasvolumenzählers und das Zählwerk ein stufenlos verstellbares Reibgetriebe eingeschaltet ist. Dieses Reibgetriebe enthält einen Kegel, der mit einer der Drehzahl der Ausgangswelle des Gasvolumenzählers proportionalen Drehzahl angetrieben wird. Diese Drehzahl ist somit proportional dem noch nicht auf Normalbedingungen reduzierten Gasvolumenstrom. An dem so angetriebenen Kegel liegt eine Reibrolle an, die längs der Erzeugenden des Kegels verschiebbar und mit einem Zählwerk gekoppelt ist. Die Reibrolle ist an einem Gewicht gelagert, welches längsverschiebbar auf einem Waagebalken sitzt und durch einen Stellantrieb längs des Waagebalkens verstellt wird, wenn der Waagebalken aus seiner Mittellage nach der einen oder der anderen Seite ausgelenkt wird. An dem Waagebalken wirkt über ein Hebelgestänge eine dem Gasdruck proportionale Kraft mit einem Hebelarm, der durch temperaturabhängige Stellmittel in Abhängigkeit von der Gastemperatur veränderlich ist. Bei geeigneter Wahl der Parameter stellt sich dann das Gewicht auf dem Waagebalken so ein, daß die von dem Kegel über die Reibrolle abgegriffene Drehzahl proportional dem auf Normalbedingungen reduzierten Gasvolumenstrom wird.

Die DE-AS 25 54 182 beschreibt einen Mengenumwerter mit einem Reibgetriebe, bei welchem ein Kegel frei drehbar gelagert ist. An dem Kegel liegt ein erster Übertragungsring an, der in einem Stellglied geführt ist und der mit seiner Innenseite wiederum an einer ersten langgestreckten Reibrolle anliegt, die sich parallel zu einer Mantellinie des Kegels erstreckt. Diese erste Reibrolle ist mit der Aus-gangswelle eines Gasvolumenzählers in Antriebsver-bindung. Der Übertragungsring ist in einem ersten Stellglied geführt, welches von einem Temperaturfühler gesteuert ist und bei steigender Temperatur zum breiteren Ende des Kegels hin verstellbar ist. Dadurch wird der Kegel mit einer umso geringeren Drehzahl angetrieben, je höher die Temperaur ist. Eine zweite langgestreckte Reibrolle ist ebenfalls parallel zu einer Mantellinie des Kegels angeordnet und mit einem Zählwerk in Antriebsverbindung. Auch diese zweite Reibrolle ist mit dem Kegel über einen zweiten Übertragungsring gekoppelt, der mit seiner Außenfläche an dem Kegel und mit seiner Innenfläche an der zweiten Reibrolle anliegt. Der zweite Übertragungsring ist von einem zweiten Stellglied geführt, das von einem Druckfühler gesteuert ist. Der zweite Übertragungsring ist durch das zweite Stellglied bei steigendem Gasdruck zum breiteren Ende des Kegels hin verstellbar. Auf diese Weise wird das Zählwerk mit einer umso höheren Drehzahl angetrieben, je höher der Gasdruck ist.

Eine ähnliche Konstruktion zeigt die DE-OS 28 48 985.

Diese bekannten Mengenumwerter sind aufwendig und aus wirtschaftlichen Gründen praktisch nur in Verbindung mit Großgaszählern anwendbar.

Die Verwendung von Reibgetrieben bei Gaszählern bringt außerdem folgendes Problem mit sich: Es muß sichergestellt sein, daß das Getriebe ohne Schlupf arbeitet, da ein Schlupf die Zählung in unkontrollierbarer Weise beeinflußen würde. Die einzel-

0197177

nen Getriebeglieder (Kegel, Reibräder etc.) müssen daher unter Vorspannung aneinander anliegen. Eine solche Vorspannung führt wiederum zu Verschleiß in Form von Durchmesseränderungen durch Abrieb. Solche Durchmesseränderungen verändern aber in der Regel das Übersetzungsverhältnis des Reibgetriebes.

Es sind Zweikammer-Gaszähler bekannt, bei denen der Gasstrom über Schieber auf zwei Kammern geleitet wird, die jede durch einen Balg in zwei Räume unterteilt ist. Das Gas wird durch die Schieber jeweils in einen Raum geleitet. Dieser dehnt sich aus, wobei der Balg sich gegen den anderen Raum bewegt und das Gas aus diesem verdrängt. Durch die Bewegung des Balges werden die Schieber umgesteuert, so daß die Räume ihre Funktion vertauschen und der Balg zurückbewegt wird. Die dabei auftretende hin- und hergehende Bewegung der Balgen in den beiden Kammern wird gleichzeitig über Gestänge auf eine gemeinsame Kurbelwelle übertragen. Die Drehung dieser Kurbelwelle treibt ein Räderzählwerk.

Bei solchen Zweikammer-Gaszählern, bei denen die Hubvolumina der beiden Kammern in Abhängigkeit vom Kurbelradius der Kurbelwelle veränderbar sind, ist es bekannt, Gasdichteänderungen, die auf unterschiedliche Betriebstemperaturen zurückzuführen sind, dadurch zu kompensieren, daß die Kurbel der Kurbelwelle als u-förmiger Bimetallstreifen ausgebildet ist. Es wird dann der Kurbelradius der Kurbelwelle und damit das pro Hub verdrängte Gasvolumen in Abhängigkeit von der Temperatur verändert. Diese Art der Temperaturkompensation ist jedoch nicht anwendbar bei Zweikammer-Gaszählern, bei denen die Balgen zwischen jeweils zwei festen Anschlägen beweglich sind, so daß sich ein konstant vorgegebenes Hubvolumen ergibt.

Der Erfindung liegt die Aufgabe zugrunde, eine einfach aufgebaute Einrichtung zur Temperaturkompensation für Gaszähler mit einem Reibgetriebe zu schaffen, bei welcher trotz geringer Vorspannung der Getriebeteile gegeneinander und entsprechend vermindertem Verschleiß eine sichere, schlupffreie Bewegungsübertragung gewährleistet ist und ein eventueller Verschleiß praktisch nicht in die Messung eingeht.

Erfindungsgemäß wird diese Aufgabe dadurch gelöst, daß das Reibgetriebe

(c) ein Paar von im Abstand voneinander angeordneten Reibscheiben aufweist, von denen eine mit dem Meßwerk und die andere mit dem Zählwerk in Antriebsverbindung steht, sowie

(d) ein Paar von Reibrädern die in Haltemitteln in einer eine Bewegung gegen die Reibscheiben zulassenden Weise gelagert und miteinander in Bewegungseingriff sind und von denen das eine an der einen und das andere an der anderen Reibscheibe reibend anliegt, und

(e) welche durch temperaturabhängigen Stellmittel relativ zu den Reibscheiben verstellbar sind.

Ein solches Reibgetriebe ist sehr einfach aufgebaut. Es kann daher auch bei üblichen Haushaltsgaszählern eingesetzt werden. Die beiden Reibräder, die miteinander in Bewegungseingriff sind, drehen sich gegensinnig. Durch die Anlage an den einander gegenüberliegenden Flächen der Reibscheiben ziehen sich die beiden Reibräder selbst gegen diese Flächen fest, wenn sie über die eine Reibscheibe angetrieben werden. Es ist also nicht erforderlich, die Teile stark zueinander vorzuspannen. Dadurch kann der Verschleiß gering gehalten werden. Wenn tatsächlich ein Verschleiß durch Abtrieb eintritt, hat dies praktisch keinen Einfluß auf das Übersetzungsverhältnis, da ein solcher Verschleiß die Radien beider Reibräder in gleichem Maße verringert. Es würde dann das meßwerkseitige Reibrad mit einer etwas erhöhten Drehzahl von der meßwerkseitigen Reibscheibe angetrieben. Das mit dem meßwerkseitigen Reibrad gekoppelte zählerseitige Reibrad treibt dafür die zählerseitige Reibscheibe mit einem entsprechend verringerten Antriebsverhältnis. Fehler infolge Durchmesserveränderungen der Reibräder heben sich daher auf.

Ausgestaltungen der Erfindung sind Gegenstand der Unteransprüche.

Ausführungsbeispiele der Erfindung sind nachstehend unter Bezugnahme auf die zugehörigen Zeichnungen näher erläutert:

Fig. 1 zeigt den Aufbau einer Einrichtung zur Temperaturkompensation bei einem Zweikammer-Gaszähler.

Fig. 2 zeigt eine Ausführungsform des Reibgetriebes.

Fig. 3 zeigt einen Schnitt längs der Linie III-III von Fig.2.

Fig. 4 zeigt eine andere Ausführungsform des Reibgetriebes in einer Darstellung ähnlich Fig.2.

Fig. 5 zeigt eine dritte Ausführungsform des Reibgetriebes.

Fig. 6 zeigt schematisch eine Ausführungsform, bei welcher die Ausgangswelle des Meßwerkes und die Eingangswelle des Zählwerkes koaxial zueinander angeordnet sind.

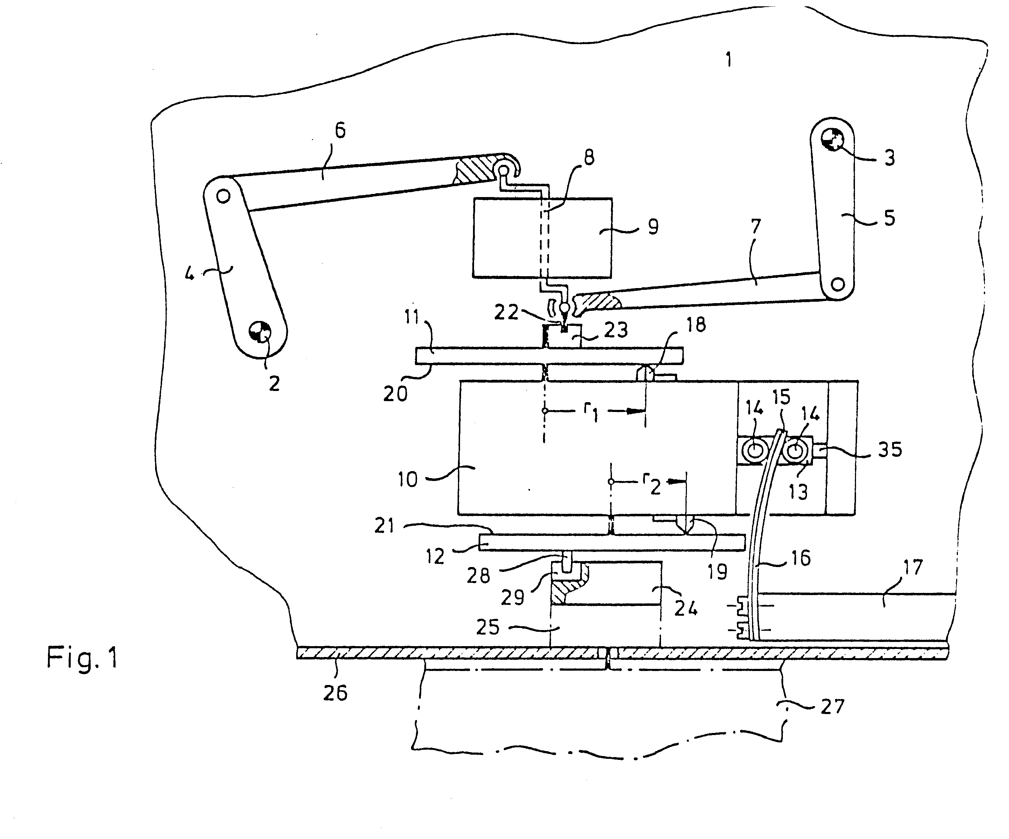

In Fig.1 bezeichnet 1 das Gehäuse des Gaszählers. Es umfaßt Lagerstellen 2 und 3 der Schwenkhebel 4,5 für die in den beiden Kammern hin- und herbewegten nicht gezeigten Balgen. Über Stangen 6,7 erfolgt die Umsetzung der Schwenkbewegungen in eine fortschreitende Drehung einer Kurbelwelle 8, die in einem Lagerteil 9 des Gehäuses 1 geführt ist. In einem weiteren Lagerteil 10 des Gehäuses 1 sind zwei Reibscheiben 11,12, zueinander versetzt, drehbar. Ebenfalls im Lagerteil 10 des Gehäuses 1 geführt ist ein als Steuerglied ausgebildeter Drehschieber 13 mit zwei Führungszapfen 14, welche das freie Ende 15 eines Bimetallstreifens 16 als Stellglied beweglich umfassen. Der Drehschieber 13 ist um einen im Lagerteil 10 festen Zapfen 35 sowohl dreh- als auch verschiebbar. Der Bimetallstreifen 16 ist fest mit einer weiteren Ausprägung 17 des Gehäuses 1 verbunden. Drehbar in ihrem Halteglied, das der Sicht in Fig.1 durch den Lager-

0197177

teil 10 entzogen ist, befinden sich Reibräder 18, 19. Das Halteglied ist seinerseits schwenkbar gegenüber dem Drehschieber 13, was in Fig.1 ebenfalls durch den Lagerteil 10 der Sicht entzogen ist. Die Reibräder 18,19 stehen reibschlüssig mit Reibflächen 20,21 der beiden Reibscheiben 11,12 mit den wirksamen Radien $r_1$ , $r_2$ derselben in Wirkeingriff.

Die Kurbelwelle 8 umfaßt außer ihren Gelenkteilen zum Zusammenwirken mit den Stangen 6,7 noch einen Kurbelzapfen 22 zur Kupplung mit einem Mitnehmer 23 an der Reibscheibe 11. In ähnlicher Weise erfolgt eine Bewegungsmitnahme zwischen der Reibscheibe 12 und einem Eingangsteil 24 einer an sich bekannten Magnetkupplung 25 für die gasdichte Drehübertragung auf ein an einer Wandung 26 des Gehäuses 1 außen befestigtes Räderzählwerk 27, das hier nur angedeutet ist. Hierzu trägt die Reibscheibe 12 einen Treibstift 28, der auf eine Mitnehmerfläche 29 des Eingangsteils 24 der Magnetkupplung einwirkt.

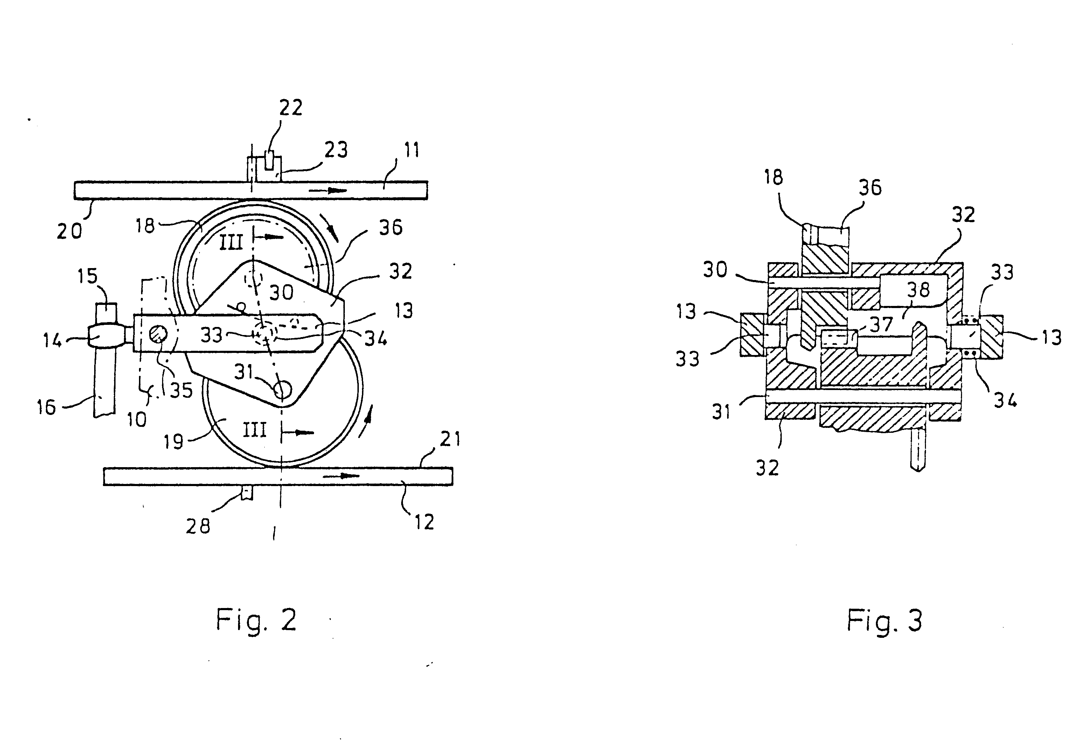

Gasdurchsatz hat wechselseitiges Verschwenken der Schwenkhebel 4,5 zwischen deren Anschlaglagen zur Folge, wodurch die Kurbelwelle 8 in Drehung versetzt wird. Dabei nimmt der Kurbelzapfen 22 über den Mitnehmer 23 die Reibscheibe 11 mit. Durch eine gleichfalls nicht in Fig.1 gezeigte Feder ist gewährleistet, daß die Reibräder 18,19 die Reibflächen 20,21 der beiden Reibscheiben 11,12 mit geringer Anpreßkraft berühren. Mit der aus Fig.2 ersichtlichen selbstanpressenden Wirkung der Anordnung und dem gegenseitigen Bewegungseingriff zwischen den Reibrädern 18,19 ist dann auch die Bewegungsübertragung von der Reibfläche 20 auf das Reibrad 18 mit dem Wirkungsradius $r_1$ und vom Reibrad 19 auf die Reibfläche 21 mit dem Wirkungsradius $r_2$ gewährleistet. Mit $r_1 : r_2$ wird die momentane Übersetzung zwischen den Reibscheiben beeinflußt, die darüber hinaus noch vom konstanten Übersetzungsverhältnis der Reibräder 18,19 sowie deren wirksamen Durchmessern abhängt. Die durch Treibstift 28 und Mitnehmerfläche 29 des Eingangsteils der Magnetkupplung 25 gebildete Mitnahmeverbindung dient der Zuführung der Drehung der Reibscheibe 12 in das Räderzählwerk 27 als Eingangsdrehung. Bei einer Änderung der Betriebstemperatur wird der Drehschieber 13 als Steuerglied durch eine Änderung der Krümmung des Stellgliedes Bimetallstreifen 16, die eine seitliche Verlagerung des freien Endes 15 desselben bewirkt, im Lagerteil 10 des Gehäuses 1 verschoben. Dies hat die zur Temperaturkompensation benötigten Änderungen der Reibradien $r_1$ und $r_2$ zur Folge.

Die in Fig. 2 gezeigte Draufsicht auf das Reibräderpaar zeigt, unmaßstäblich, Lagerachsen 30,31 der Reibräder 18,19 in dem als einstückigen Rahmen 32 ausgebildeten Halteglied. Der Rahmen 32 ist schwenkbar gegenüber dem Drehschieber 13 um Zapfen 33 und mittels einer Schenkelfeder 34 gegen diesen verspannt. Gegenüber dem Lagerteil 10 ist der Drehschieber 13 mit Hilfe eines Zapfens 35 sowohl dreh- als auch verschiebbar, wobei die Verdrehbarkeit sicherstellt, daß beide Reibräder 18,19 ihre jeweiligen Reibpartner, Reibscheiben 20,21 berühren. Die Drehung der Kurbelwelle 8, Fig.1, bei Gasdurchsatz führt zur Mitnahme der Reibscheibe 11. Durch Voranpressung des Reibrades 18 an die Reibfläche 20 der Reibscheibe 11 mittels der Schenkelfeder 34 wird ein Moment reibschlüssig auf das Reibrad 18 übertragen. Mit dem Reibrad 18 einstückig verbunden ist das Zahnrad 36. Es steht im Bewegungseingriff mit einem Zahnrad 37, das einstückig verbunden mit dem Reibrad 19, durch dieses aber verdeckt ist. Die Drehung des Reibrades 19 wird, ebenfalls reibschlüssig, über die Reibfläche 21 der Reibscheibe 12 übertragen, von dieser über den Reibstift 28 dem Räderzählwerk 27 zugeleitet.

Der in Fig.3 dargestellte Schnitt gemäß Schnittlinie III-III in Fig.2 läßt die mögliche Ausbildung des einstückigen Rahmens 32 erkennen. Die beiden die Bohrung für die Lagerachsen 30,31 aufnehmenden Plattenteile sind durch zwei Stege 38 außerhalb der Reibräder 18,19, von welchen der hinter der Schnittebene liegende zu sehen ist, verbunden.

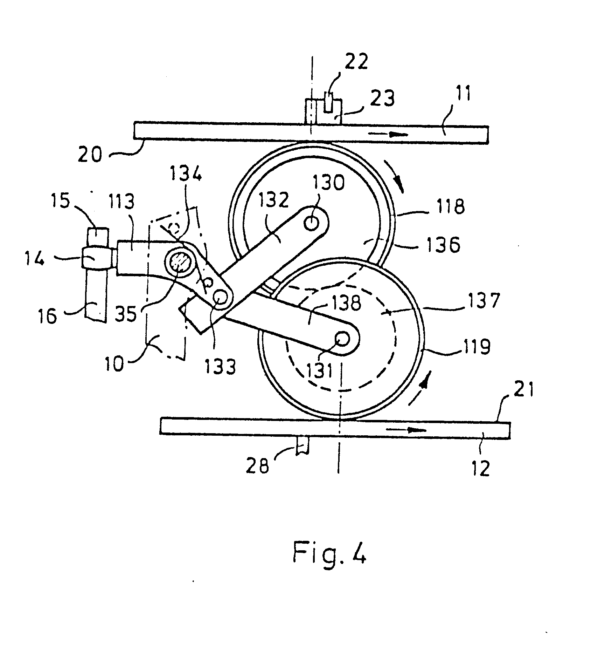

In Fig. 4 ist das Halteglied als scherenartig gegeneinander verschwenkbare Haltebügel 132,138 ausgebildet, die gemeinsam um eine Achse 133 des Drehschiebers 113 gelagert sind. Als Steuerglied wirkt der Drehschieber 113 in gleicher Weise wie in Fig.2 mit dem Bimetallstreifen 16 als Stellglied zusammen. Die Reibräder 118,119 sind jeweils einstückig mit Reibrädern 136,137 verbunden, die in reibschlüssigem Bewegungseingriff stehen. Ihre Berührung wird zusammen mit dem jeweiligen Berührungen der Reibräder 118,119 mit den Reibflächen 20,21 der Reibscheiben 11,12 durch eine Schenkelfeder 134 gesichert.

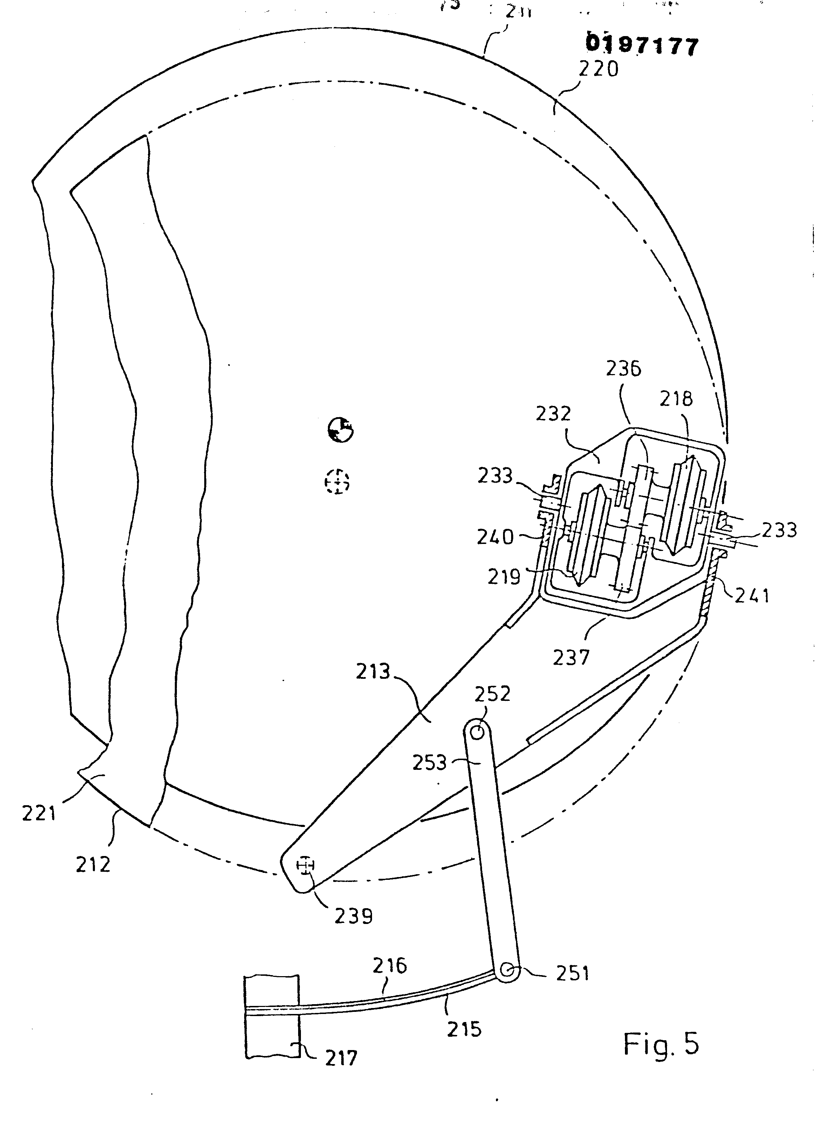

In Fig.5 ist eine mögliche Ausführung des Steuergliedes als um eine feste Achse 239 schwenkbare Schwinge 213 gezeigt. Das als Rahmen 232 ausgebildete Halteglied ist mit Zapfen 233 in Seitenwänden 240,241 der in bezug zur Bewegungsebene biegeweich ausgebildeten Schwinge 213 drehbar gelagert. Die Reibräder 218,219 sind jeweils einstückig mit Zahnrädern 236,237 verbunden, über die sie im Bewegungseingriff stehen. Die Voranpressung der Reibräder 218,219 an ihre Reibpartner, die Reibflächen 220,221 der Reibscheibe 211,212, erfolgt wie in Fig.2 durch eine Schenkelfeder, die jedoch nicht dargestellt ist. Abweichend von den vorangegangenen Ausbildungen der Erfindung wirken das wiederum als Bimetallstreifen 216 ausgebildete Stellglied und das Steuerglied nicht unmittelbar, sondern mittelbar zusammen. Die Schwinge 213 und das freie Ende 215 des Bimetallstreifens 216, der in einer Ausprägung 217 des Gehäuses befestigt ist, sind hierzu durch eine Lasche 253 in Anlenkungen 251,252 verbunden.

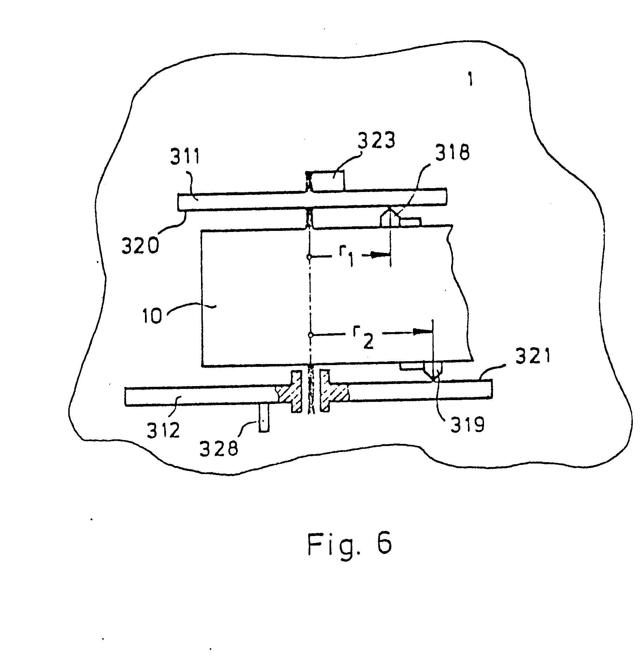

In Fig.6 liegen weitgehend gleichartige Verhältnisse wie in Fig.1 vor, jedoch mit der vorteilhaften Besonderheit koaxial zusammenfallender Drehachsen von nicht gezeigter Kurbelwelle 8 und Eingangsglied des Räderzählwerks 27. Wegen der in verschiedenen Bewegungsebenen liegenden Eingriffe der Reibräder 318,319 mit den Reibflächen 320,321 an ihren Reibscheiben 311,312 wird auch hier mit gemeinsamer Verschiebung beider Reibräder das Verhältnis der Radien $r_1$ ,$r_2$ geändert.

0197177

Patentansprüche

1. Einrichtung zur Temperaturkompensation bei einem Gaszähler, bei welchem ein Zählwerk von einem Meßwerk des Gaszählers antreibbar ist, enthaltend

(a) ein in die Antriebsverbindung zwischen Meßwerk und Zählwerk eingeschaltetes, stufenlos verstellbares Reibgetriebe und

(b) temperaturabhängige Stellmittel, durch welche das Reibgetriebe verstellbar ist,

dadurch gekennzeichnet, daß das Reibgetriebe

(c) ein Paar von im Abstand voneinander angeordneten Reibscheiben (11,12;211,212; 311, 312) aufweist, von denen eine mit dem Meßwerk und die andere mit dem Zählwerk in Antriebsverbindung steht sowie

(d) ein Paar von Reibrädern (18,19;118,119; 218,219) die in Haltemitteln (32,132,138, 232) in einer eine Bewegung gegen die Reibscheiben (11,12;211,2112;311,312) zulassenden Weise gelagert und miteinander in Bewegungseingriff sind und von denen das eine an der einen und das andere an der anderen Reibscheibe (11,12,211,212; 311,312) reibend anliegt und

(e)  welche durch die temperaturabhängigen Stellmittel (16,216) relativ zu den Reibscheiben (11,12;211,212;311,312) verstellbar sind.

2.  Einrichtung nach Anspruch 1, dadurch gekennzeichnet, daß

(a)  die Haltemittel (32;132,138,232) schwenkbar an einem Steuerglied (13,113;213) gelagert sind und

(b)  das Steuerglied (13;113;213) durch die temperaturabhängigen Stellmittel (16;216) verstellbar sind.

3.  Einrichtung nach Anspruch 2, dadurch gekennzeichnet, daß

(a)  die Achsen einer Ausgangswelle des Meßwerks und einer Eingangswelle des Zählwerks zueinander parallel sind und

(b)  die Reibscheiben (11,12) ebene, zueinander parallele und einander zugewandte Flächen (20,21) senkrecht zu den Achsen der Ausgangs- bzw. Eingangswellen aufweisen.

4.  Einrichtung nach Anspruch 3, dadurch gekennzeichnet, daß

(a)  die Haltemittel ein starres Halteglied (32) sind, in welchem die Reibräder (18, 19) um zueinander und zu den Flächen (20, 21) der Reibscheiben (11,12) parallele

0197177

Achsen gelagert sind, die parallel zu diesen Flächen (20,21) seitlich versetzt sind, und

(b) das Halteglied (32) um eine zu den Achsen der Reibräder (18,19) parallele Achse (33) schwenkbar an dem Steuerglied (34) gelagert ist.

5. Einrichtung nach Anspruch 3, dadurch gekennzeichnet, daß

(a) die Haltemittel ein Paar von Haltebügeln (132,138) aufweisen,

(b) die Reibräder (118,119) an je einem Ende der Haltebügel (132,138) gelagert sind und

(c) die Haltebügel (132, 138) an den anderen Enden um eine Achse (133) schwenkbar miteinander und mit dem Steuerglied (113) verbunden sind.

6. Einrichtung nach Anspruch 2, dadurch gekennzeichnet, daß das Steuerglied (13;113) schwenkbar und axial verschiebbar auf einer gerätefesten Achse (35) gelagert ist.

7. Einrichtung nach Anspruch 2, dadurch gekennzeichnet, daß das Steuerglied eine Schwinge (213) ist, die um eine zu den parallelen Achsen der Reibscheiben (311,312) parallele Schwenkachse (239) verschwenkbar gelagert ist.

8. Einrichtung nach Anspruch 1, dadurch gekennzeichnet, daß

(a) an den Reibrädern (18,19) Zahnräder (36, 38) angeformt sind und

(b) die angeformten Zahnräder (36,37) der beiden Reibräder (18,19) unmittelbar miteinander in Eingriff sind.

9. Einrichtung nach Anspruch 1, dadurch gekennzeichnet, daß die Reibräder (118,119) durch federnde Mittel (132) an die Reibscheiben (11, 12) angelegt sind.

10. Einrichtung nach Anspruch 1, dadurch gekennzeichnet, daß die temperaturabhängigen Stellmittel eine Bimetallfeder (16) enthalten.

Fig.1

Fig. 2

Fig. 3

0197177

Fig. 4

0197177

Fig. 5

0197177

Fig. 6

**Europäisches Patentamt**

**0197177**
Nummer der Anmeldung

## EUROPÄISCHER RECHERCHENBERICHT

EP   85 10 4325

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | US-A-2 222 551  (H. ZIEBOLZ u.a.) <br> * Figur 3; Seite 2, Zeilen 12-55 * | 1 | G 01 F   15/04 <br> G 01 F   3/22 <br> G 01 D   3/04 |
| A | --- | 2-4 | |
| A | FR-A-2 016 333  (FERRANTI LTD.) <br><br> * Figuren; Seite 3, Zeilen 8-28 * | 1,2,5, 6 | |
| X | --- | 3,4 | |
| A | FR-A-1 161 245  (K. HAAS) <br> * Figuren; Seite 1, rechte Spalte, Zeile 9 - Seite 2, linke Spalte, erster Absatz; Seite 2, rechte Spalte, letzter Absatz - Seite 3, linke Spalte, erster Absatz * | 1-3 | RECHERCHIERTE SACHGEBIETE (Int Cl 4) |
| X | ----- | 9,10 | G 01 F <br> G 01 K <br> G 01 D |

Der vorliegende Recherchenbericht wurde für alle Patentansprüche erstellt.

| Recherchenort | Abschlußdatum der Recherche | Prüfer |
|---|---|---|
| DEN HAAG | 06-12-1985 | NUIJTEN E.M. |